# EUROPÄISCHE PATENTANMELDUNG

(11) **EP 1 030 500 A2**
(43) Veröffentlichungstag der Anmeldung: **23.08.2000**
(21) Anmeldenummer: 00101037.0
(22) Anmeldetag: 20.01.2000
(51) Int. Cl.: H04M 1/247

(54) **Verfahren zur Umsetzung von insbesondere mehrzeiliger Displayinformationen**

(30) Priorität: 19.02.1999 DE 19906907
(71) Anmelder: ROBERT BOSCH GMBH, 70442 Stuttgart (DE)
(72) Erfinder: Maldener, Nico-Johannes, 71229 Leonberg (DE); Glaser, Ulrich, 70499 Stuttgart (DE)

(57) **Zusammenfassung**

Zur Umsetzung insbesondere mehrzeiliger Displayinformationen eines Anzeigegerätes (1) wird die Displayinformation zeilenweise an ein Zusatzmodul (2) übermittelt und dort gespeichert (3). Die Ausgabe der Information beim Zusatzmodul (2) erfolgt über eine Auswahlsteuerung (4) des Speichers (3). Änderungen des Speicherinhaltes werden signalisiert (7,8).

## Beschreibung

### Stand der Technik

Die Erfindung betrifft ein Verfahren zur Umsetzung von insbesondere mehrzeiliger Displayinformation eines Anzeigegerätes sowie ein Zusatzmodul zur Umsetzung von insbesondere mehrzeiliger Displayinformation eines Anzeigegerätes.

Ein an Blindenarbeitsplätzen häufig eingesetztes Hilfsmittel ist die sogenannte Braillezeile. Sie übersetzt alphanumerische Texte in Punktschrift, die dann durch Befühlen der Braillezeile gelesen werden können.

In Abfrageterminals von Vermittlungsplätzen mit mehrzeiliger Displayanzeige, beispielsweise den Abfrageterminals VA93 (Prospekt der Firma Bosch-Telecom 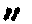 ISDN-Telekommunikationssystem Integral 33x, Seiten 27 und 28) oder OS13, erfolgt bisher eine Umsetzung der Displayinformation auf ein einzeiliges Braillemodul mit stark reduziertem Informationsgehalt.

### Vorteile der Erfindung

Mit den Maßnahmen des Anspruchs 1 oder 8, beziehungsweise deren Unteransprüchen, ist es möglich insbesondere mehrzeilige Displayinformation in einem Zusatzmodul ohne Informationsverlust insbesondere in nicht visueller Form auszugeben. Auch für mehrzeilige Displayinformation, die in mehrere funktionale Bereiche unterteilt ist, daß heißt neben einem Standardarbeitsfenster können durch Funktionssteuerung weitere Bereiche (Fenster) mit Displayinformation sichtbar gemacht werden, welche sich gegenseitig sowie das Standardarbeitsfenster ganz oder teilweise überdecken, kann durch eine Auswahlsteuerung der Informationsgehalt aller Bereiche (Fenster) zeilenweise, zum Beispiel in Punktschrift, beim Zusatzmodul ausgegeben werden.

Durch die Auswahlsteuerung durch den Benutzer ergibt sich eine einfachere Handhabung und eine Verbesserung der Ergonomie. Außerdem ist der Umfang der Darstellungsmöglichkeiten und der Informationsfluß verbessert. Ein Änderung der Displayinformation wird sofort signalisiert, zum Beispiel durch ein akustisches oder taktiles Signal und so der Benutzer darauf aufmerksam gemacht. Priorisierte Informationen werden sofort ausgegeben, ohne daß der Benutzer die Daten erst abrufen muß. Über ein zusätzliches Ausgabefeld für insbesondere priorisierte Informationen, Signalisierungs- und/oder Steuerinformationen ist eine automatische Lenkung des Bedieners auf relevante Inhalte möglich. Durch eine Auswahlsteuerung des Speichers, z.B. durch einfache Tastenbetätigung, kann der Inhalt verschiedener Fenster gezielt zeilenweise abgefragt werden.

Die Erfindung läßt sich bei unterschiedlichen Anzeigegeräten mit visueller Schnittstelle zur Anzeige von Textinformationen anwenden, daß heißt beispielsweise bei Vermittlungsplätzen mit insbesondere fensterorientierten mehrzeiligen Displays, Personal Computern, beispielsweise mit Internet-Telefonanwendung u.s.w.

### Zeichnungen

Anhand der Zeichnungen werden Ausführungsbeispiele der Erfindung näher erläutert. Es zeigen
Figur 1 eine Übersicht über einen Vermittlungsplatz mit Displayanzeige,
Figur 2 einen Vermittlungsplatz mit Personal Computer, Vermittlungsapparat und Blindenmodul.

### Beschreibung von Ausführungsbeispielen

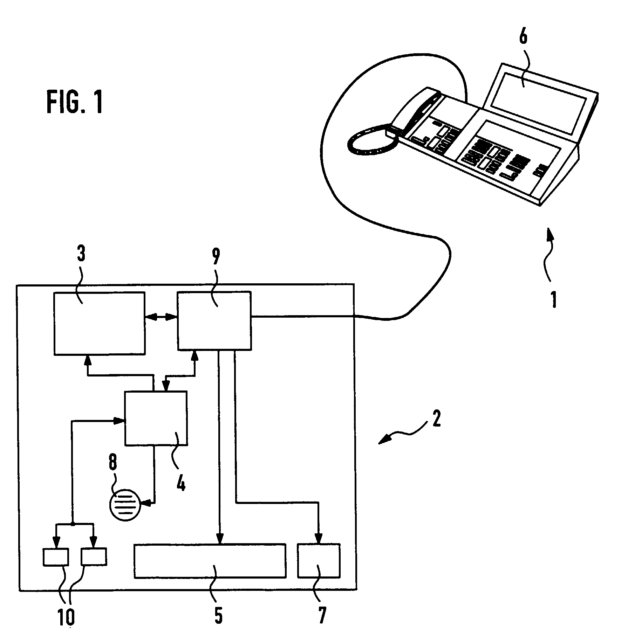

Figur 1 zeigt einen Vermittlungsapparat in Form eines Abfrageterminals 1 für einen Vermittlungsplatz, welcher ein Display 6 für mehrzeilige alphanumerische Texte aufweist. Auf diesem Display sind typische für einen Vermittlungsplatz, beispielsweise in einem Call-Center auftretende Texte wie Verkehrsart, Externanrufe mit Leitungs- und Rufnummer, Rückfrageverbindungen mit Internrufnummer und/oder Name, Belegzustand, Warten der Anrufe u.s.w. anzeigbar. Das Display 6 ist in mehrere funktionale Bereiche eingeteilt. Neben einem ständig sichtbaren Standardarbeitsfenster können zusätzlich beliebig viele Fenster über die funktionalen Bereiche gelegt und bedient werden, die das Standardarbeitsfenster ganz oder teilweise überdecken.

Die Displayinformationen werden zeilenweise und zwar für alle Fensterinhalte an ein Zusatzmodul 2 übermittelt und dort in einem Speicher 3, vorzugsweise zeilenweise in Zeilenregistern, abgelegt, und zwar auch dann, wenn die Displayinformationen in sich ganz oder teilweise überdeckenden Displayfenstern untergebracht sind. Dazu können die übermittelten Displayzeilen mit einer Zeilen- und Fensteradresse versehen werden, damit sie über die Auswahlsteuerung 4 zeilenweise nach Umsetzung mittels der Umsetzeinrichtung 9 insbesondere in Punktschrift in einem Ausgabefeld der Ausgabeeinrichtung 5, vorzugsweise einer Braillezeile des Zusatzmoduls 2 ausgegeben werden können. Für die Auswahl bestimmter Zeilen und/oder Fenster sind Steuertasten 10 vorgesehen, die entsprechende Auswahlbefehle über die Auswahlsteuerung 4 an den Speicher 3 weitergeben. Damit kann der Benutzer verschiedene Speicherbereiche und damit verschiedene Fenster zeilenweise abfragen. Ändert sich der Speicherinhalt, erfolgt eine Signalisierung, das heißt, der Benutzer wird durch ein akustisches und/oder taktiles Signal auf die Änderung aufmerksam gemacht. Dazu ist ein akustischer Geber 8 vorgesehen, sowie ein zusätzliches Ausgabefeld 7, z.B. eine Braillezeile mit nur 3 Zeichen. Das zusätzliche Ausgabefeld 7 kann auch in die Braillezeile 5 an einem fest vereinbarten Platz vorzugsweise am Anfang oder Ende integriert sein.

Bei besonders wichtigen Informationen - priorisierten Informationen - wird der aktuelle Speicherinhalt einer Zeile sofort ausgegeben, ohne daß der Benutzer die Daten erst über die Betätigung der Steuertasten 10 abrufen muß.

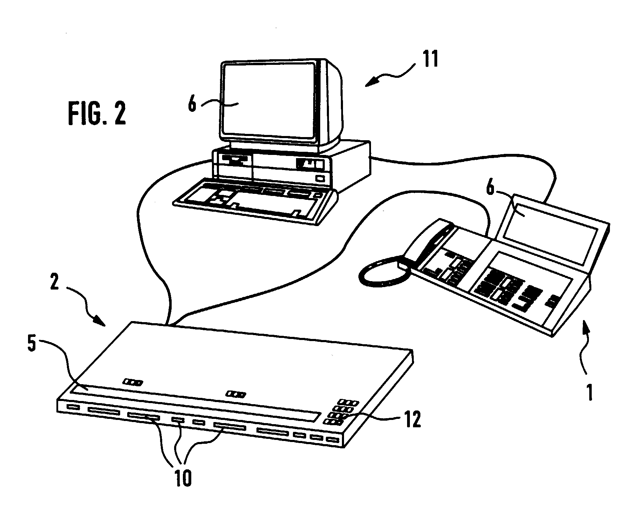

Figur 2 zeigt einen Vermittlungsplatz mit Vermittlungsapparat 1, Personal Computer 11 und Zusatzmodul 2 in Form eines Blindenmoduls mit Braillezeile und Steuertasten 10 in Form von Daumentasten. Wenn die Vermittlungsperson die Texte für das Blindenmodul 2 vom Personalcomputer 11 empfängt, ist dort eine Software-Applikation beispielsweise unter Windows aktiv, die dafür sorgt, daß die dort im Fokus enthaltenen Texte auf dem Blindenmodul 2 ausgegeben werden.
Vermittlungsaktivitäten werden durch Applikationstasten des Personal Computers 11 oder durch Makrosequenzen auf den Daumentasten 10 ausgelöst. Durch dieses Konzept wird ein ständiger Wechsel der Hände des Blinden zwischen Blindenmodul 2 und der PC-Tastatur auf ein Minimum reduziert.

Wechselt die Bedienperson auf den Vermittlungsapparat 1 als Textquelle, empfängt das Blindenmodul 2 von dort die Texte. Der Benutzer findet hier die vom Vermittlungsapparat bekannte Bedienung vor, jedoch mit der Erweiterung, daß auf den Daumentasten 10 und einem Tastenwahlblock 12 des Blindenmoduls 2 die Eingabe der Wahlziffern und die vermittlungstechnischen Funktionen wie Abfrage, Ende, Trennen und Überweisen am Blindenmodul 2 bedient werden können. Dadurch wird auch hier der Wechsel der Hände zwischen dem Blindenmodul 2 und der Tastatur des Vermittlungsapparates 1 auf ein Minimum reduziert.

Die Erfindung ist nicht auf die Anwendung bei einem Abfrageterminal eines Vermittlungsplatzes beschränkt. Überall dort, wo Anzeigegeräte mit visueller Schnittstelle zur Anzeige von Textinformationen vorgesehen sind, läßt sich das erfindungsgemäße Verfahren, bzw. das Zusatzmodul nach der Erfindung einsetzen. Besonders dort, wo mehrzeilige Anzeigeeinheiten (Displays) zum Einsatz kommen und zusätzlich eine Priorisierung des Informationsgehaltes notwendig ist, trägt die Erfindung zur ergonomischen Gestaltung der Benutzerschnittstelle in hohem Maße bei.

Anstelle einer Umsetzung in Punktschrift, kann auch eine Umsetzung in Bildsymbole erfolgen. Dies ist für Benutzer vorteilhaft, die die Sprache, in der die Textinformation im Display angezeigt wird, nicht verstehen. Die Ausgabe der im Speicher 3 abgelegten Informationen kann auch akustisch über einen Sprachbaustein erfolgen. Auch Kombinationen verschiedener Ausgabemedien sind möglich.

## Patentansprüche

1. Verfahren zur Umsetzung von insbesondere mehrzeiliger Displayinformation eines Anzeigegerätes (1) mit folgenden Schritten:
- die Displayinformation wird zeilenweise an ein Zusatzmodul (2) übermittelt und dort in einem Speicher (3) abgelegt,
- die Ausgabe der übermittelten Information beim Zusatzmodul (2), insbesondere in nicht alphanumerischer Form, wird durch eine Auswahlsteuerung (4) des Speichers (3) vorgenommen,
- bei Änderungen des Inhalts des Speichers (3) erfolgt eine Signalisierung (7,8) insbesondere in nicht alphanumerischer Form.

2. Verfahren nach Anspruch 1, dadurch gekennzeichnet, daß die Ausgabe der zeilenweise übermittelten Displayinformation beim Zusatzmodul (2) in einer Braillezeile (5) erfolgt.

3. Verfahren nach Anspruch 1 oder 2, dadurch gekennzeichnet, daß die fensterorientierte Displayinformation auch dann zeilenweise an das Zusatzmodul (2) übermittelt wird, wenn die Displayinformation in sich ganz oder teilweise überdeckenden Displayfenstern (6) enthalten ist.

4. Verfahren nach einem der Ansprüche 1 bis 3, dadurch gekennzeichnet, daß über die Auswahlsteuerung (4) des Speichers (3) Displayinhalte verschiedener Displayfenster (6), insbesondere auch wenn diese beim Anzeigegerät ganz oder teilweise überdeckt sind, zeilenweise ausgegeben werden.

5. Verfahren nach einem der Ansprüche 1 bis 4, dadurch gekennzeichnet, daß priorisierte, daß heißt besonders wichtige Informationen, sofort ausgegeben werden.

6. Verfahren nach einem der Ansprüche 1 bis 5, dadurch gekennzeichnet, daß priorisierte Informationen und/oder Steuerinformationen in einem zusätzlichen Ausgabefeld (7) ausgegeben werden.

7. Verfahren nach einem der Ansprüche 1 bis 6, dadurch gekennzeichnet, daß die Signalisierung durch ein akustisches und/oder taktiles Signal erfolgt.

8. Zusatzmodul zur Umsetzung von insbesondere mehrzeiliger Displayinformation eines Anzeigegerätes (1) mit folgenden Merkmalen:
- einem Speicher (3) zur Speicherung der vom Anzeigegerät (1) zeilenweise übermittelten Displayinformation,
- einer Ausgabeeinrichtung (5) für die übermittelte Displayinformation insbesondere in nicht alphanumerischer Form,
- einer Auswahlsteuerung (4) für den Speicher (3) zur Auswahl zeilenweise auszugebender Information,
- einer Signalisierungseinrichtung (7,8), die bei Änderungen des Inhaltes des Speichers (3) aktivierbar ist.

9. Zusatzmodul nach Anspruch 8, dadurch gekennzeichnet, daß die Ausgabeeinrichtung (5) ein Ausgabefeld für die zeilenweise übermittelte Displayinformation und ein zusätzliches Ausgabefeld (7) für insbesondere priorisierte Informationen, Signalisierungs- und/oder Steuerinformationen aufweist.

10. Zusatzmodul nach Anspruch 8 oder 9, dadurch gekennzeichnet, daß die Ausgabeeinrichtung (5) bzw. die Ausgabefelder(5,7) eine Braillezeile aufweisen.

11. Zusatzmodul nach einem der Ansprüche 8 bis 10, dadurch gekennzeichnet, daß das Zusatzmodul (2) Tasten (10,12) aufweist zur Durchführung der Ausgabe nicht alphanumerischer Texte und/oder vermittlungstechnischer Vorgänge verschiedener anschließbarer Anzeigegeräte (1,11).
